(19) Europäisches Patentamt / European Patent Office / Office européen des brevets

(11) **EP 3 678 843 B1**

(12) **EUROPÄISCHE PATENTSCHRIFT**

(45) Veröffentlichungstag und Bekanntmachung des Hinweises auf die Patenterteilung:
**28.08.2024 Patentblatt 2024/35**

(21) Anmeldenummer: **18765887.7**

(22) Anmeldetag: **07.09.2018**

(51) Internationale Patentklassifikation (IPC):
**B29C 49/78** *(2006.01)* **B29C 49/64** *(2006.01)*
**B29C 49/08** *(2006.01)* **B29C 49/36** *(2006.01)*

(52) Gemeinsame Patentklassifikation (CPC):
**B29C 49/6436; B29C 49/786;** B29C 49/08;
B29C 49/36; B29C 49/6445; B29C 2049/023;
B29C 2049/2095; B29C 2049/7861;
B29C 2049/78675

(86) Internationale Anmeldenummer:
**PCT/EP2018/074185**

(87) Internationale Veröffentlichungsnummer:
**WO 2019/048628 (14.03.2019 Gazette 2019/11)**

(54) **VORRICHTUNG UND VERFAHREN ZUM ERWÄRMEN VON KUNSTSTOFFVORFORMLINGEN MIT STEUERBARER HEIZLEISTUNG**

DIVICE AND PROCESS FOR HEATING OF PREFORMS WITH CONTROLLABLE HEATING POWER

DISPOSITIF ET PROÉDÉ DE CHAUFFAGE DE PREFROM AVEC PUISSANCE DE CHAUFFAGE CONTROLLÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.09.2017 DE 102017120634**

(43) Veröffentlichungstag der Anmeldung:
**15.07.2020 Patentblatt 2020/29**

(73) Patentinhaber: **Krones AG**
**93073 Neutraubling (DE)**

(72) Erfinder:
• **KITZINGER, Thomas**
**93073 Neutraubling (DE)**
• **FINGER, Dieter**
**93073 Neutraubling (DE)**

(74) Vertreter: **Hannke Bittner & Partner mbB**
**Regensburg**
**Prüfeninger Straße 1**
**93049 Regensburg (DE)**

(56) Entgegenhaltungen:
EP-A1- 2 390 082　　　EP-B1- 2 390 082
WO-A1-2012/172250　　AT-U1- 521
DE-A1- 102009 015 519　DE-A1- 102009 026 259
DE-A1- 102009 047 541　DE-A1- 102015 122 106
US-A1- 2006 157 896　　US-A1- 2007 066 714
US-A1- 2010 314 806

**Beschreibung**

Die vorliegende Erfindung bezieht sich auf eine Vorrichtung und ein Verfahren zum Erwärmen von Kunststoffvorformlingen. Im Bereich der getränkeherstellenden Industrie ist es üblich, dass zunächst Kunststoffvorformlinge erwärmt werden und anschließend mittels eines Umformungsvorgangs, wie beispielsweise eines Streckblasvorgangs, zu Kunststoffbehältnissen wie Kunststoffflaschen umgeformt werden. Dabei kann auch bereits bei der Erwärmung der Kunststoffvorformlinge üblicherweise eine Profilierung der Erwärmung beispielsweise in einer Längsrichtung der Kunststoffvorformlinge vorgenommen werden.

Entsprechend weisen derartige Erwärmungsvorrichtungen von Streckblasmaschinen üblicherweise eine bestimmte Anzahl von Heizkästen auf, die in einer Laufrichtung der Kunststoffvorformlinge hintereinander angeordnet sind. Dabei weist bevorzugt jeder dieser Heizkästen eine Vielzahl von übereinander angeordneten Erwärmungseinrichtungen, wie beispielsweise Lampen, die beim Vorbeifahren der Kunststoffvorformlinge für die Profilierung sorgen, auf, das heißt, einzelne (in der Längsrichtung der Kunststoffvorformlinge übereinanderliegende) Bereiche bzw. Schichten der Kunststoffvorformlinge können unterschiedlich temperiert bzw. erwärmt werden. Durch diese Temperierung kann die Materialverteilung während dem nachfolgenden Streckblasprozess gesteuert werden.

Aus dem internen Stand der Technik der Anmelderin ist es dabei bekannt, dass sich jedes Heizelement, beispielsweise jede Lampe, in einer Lampenmatrix einzeln einschalten lässt, wobei auf einer Benutzeroberfläche in x-Richtung Heizkästen dargestellt werden und in y-Richtung die einzelnen Lampen eines Heizkastens. In diesem Falle kann der Benutzer gezielt einzelne Erwärmungselemente, wie Heizlampen, auswählen. Ein bestimmter Energieeintrag in einer Schicht ergibt sich dabei sowohl über die Anzahl der eingeschalteten Lampen einer Schicht als auch über einen Prozentwert, mit dem alle Lampen von beispielsweise einer Schicht nochmal gewichtet werden können. Daneben ist bei den intern bekannten Vorrichtungen der Anmelderin auch noch ein übergeordneter Temperaturregler bekannt, dessen Stellgröße das gesamte Lampenfeld, das heißt sowohl in x- als auch in y-Richtung nachführt. Für die Lampen einer bestimmten Schicht ergibt sich daher folgende Lampenleistung:

$$P_{Lampe\_y} = P_{nenn\_y} * \%_{Temperaturregler} * \%_{Schicht\_y}$$

Dabei bezeichnet y = Schicht die oben genannten einzelnen Schichten, beispielsweise Werte von 1 bis 9.

$$E_y = P_{nenn\_y} * \%_{Temperaturregler} * \%_{Schicht\_y} * \sum Ein_X * t$$

Dabei bezeichnet x die jeweilige Heizeinrichtung, genauer gesagt die jeweilige Heizstrecke und wird von 1 bis n durchgezählt, y bezeichnet den Bereich bzw. die Schicht und t die Verweilzweit vor einer einzelnen Heizstrecke (damit ist bevorzugt einer Heizeinrichtung auch eine bestimmte Heizstrecke zuordenbar). $E_Y$ bezeichnet die von einer Heizeinrichtung abgegebene Energiemenge während der Vorbeibewegung eines Kunststoffvorformlings bzw. die Energie, welche auf die jeweilige Schicht des Kunststoffvorformlings abgestrahlt wird. Um hieraus den Energieeintrag in den einzelnen Kunststoffvorformling zu bestimmen müsste zusätzlich noch der Anteil der für die Erwärmung eines einzelnen Kunststoffvorformlings wirksamen Leistung berücksichtigt werden.

Damit erfordert diese hier beschriebene Lampenmatrix sehr viele Bedienereingaben, sodass die Prozessfindung aufwändig ist und teilweise nur durch speziell geschultes Fachpersonal durchgeführt werden kann. Darüber hinaus sind häufig Varianzen möglich. So wäre es beispielsweise möglich, bei wenigen eingeschalteten Lampen in einer Schicht die verbleibenden Lampen auf die gesamte Ofenlänge zu verteilen oder diese eher am Anfang oder am Ende einzuschalten. Dies wiederum erschwert die Prozessfindung erheblich und führt auch dazu, dass verschiedene Verfahrenstechniker zu unterschiedlichen Rezepten kommen.

US 2010/314806 A1 offenbart ein Verfahren und eine Vorrichtung zum Blasformen von Behältern, bei dem zunächst ein Vorformling aus einem thermoplastischen Material im Bereich eines Heizabschnitts entlang einer Transportbahn einer thermischen Konditionierung unterzogen. Anschließend wird der Vorformling durch Einwirkung von Blasdruck in den Behälter innerhalb einer Blasform überführt. Die thermische Konditionierung der Vorformlinge der Vorformlinge erfolgt durch eine Anzahl übereinander angeordneter Strahlungsheizungen. Die Heizstrahler werden bei der Heizprofil aktiviert und im Standby-Betrieb gemäß einem zweiten Heizprofil aktiviert.

DE 10 2009 047541 A1 offenbart einen Ofen zum Streckblasen von Vorformlingen zu Kunststoffgefäßen, mit einem Heizrad, an dem mehrere Heizmodule zum Erwärmen je eines Vorformlings angeordnet sind. Ferner offenbart diese eine Steuereinrichtung zum Ansteuern der Heizmodule auf Grundlage der gemessenen Temperatur.

AT 521 U1 bezieht sich auf ein Verfahren zur Einstellung von Verfahrensparametern bei der Herstellung von Hohlkörpern aus rohrförmigen, thermoplastischen Vorformlinge, insbesondere in einer Streckblasmaschine, wobei die Vorformlinge in einer Heizvorrichtung aufgewärmt werden.

EP 2390082 A1 offenbart ein Verfahren zur Temperatursteuerung und/oder -regelung einer Heizvorrichtung für Vorformlinge in einem Blas- bzw. Streckblasvorgang. Der Temperierungsvorgang umfasst mindestens zwei getrennte, aufeinander folgende Heizstufen, wobei in der ersten Heizstufe eine annähernd gleichmäßige Grundtemperierung des gesamten Vorformlings erfolgt.

DE 102009015519 A1 offenbart eine Vorrichtung zum Umformen von Kunststoffvorformlingen zu Kunststoffbehältnissen mit einer Vielzahl von Blasstationen und einer Vielzahl von Erwärmungseinrichtungen, welche entlang des Transportpfads jedes Behältnisses stromaufwärts der Blasstationen angeordnet sind.

WO 2012/172250 A1 offenbart ein Verfahren zum Erwärmen eines Kunststoffvorformling, bei dem eine Messung der Wandtemperatur des Vorformlings erfolgt während die Vorformlinge der Strahlung ausgesetzt werden.

DE 10 2009 026259 A1 offenbart eine Vorrichtung und ein Verfahren zum Vorwärmen von Vorformlingen. Diese umfasst eine Steuereinheit mit der die Strahler jeweils einzeln ansteuerbar und regelbar sind.

Die US 2006/157896 A1 offenbart ein Verfahren und eine Vorrichtung zur Herstellung von Falschen und Preforms mit einem kristallinen Hals.

DE 10 2015 122106 A1 offenbart ein Verfahren zum Erwärmen von Kunststoffvorformlingen, wobei die Kunststoffvorformlinge mittels einer Transporteinrichtung entlang eines vorgegebenen Transportpfads transportiert werden und währen dieses Transports von wenigstens einer ersten elektrisch betriebenen Heizeinrichtung erwärmt werden, wobei während oder nach der Erwärmung der Kunststoffvorformlinge mittels einer ersten Messeinrichtung eine Temperatur der Kunststoffvorformlinge erfasst wird.

Die US 2007/066714 A1 offenbart ein Polyesterpolymer und Copolymer-Zusammensetzungen, die Carbonbeschichtete Eisenpartikel beinhalten.

Die EP 2390 082 B1 offenbart eine Vorrichtung und ein Verfahren zum Steuern und/oder Regeln der Temperatur einer Heizeinrichtung für Vorformlinge.

Der vorliegenden Erfindung liegt daher die Aufgabe zugrunde, eine Vorrichtung und ein Verfahren zur Verfügung zu stellen, welches insbesondere einfacher zu bedienen ist. Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Erwärmen von Kunststoffvorformlingen weist eine Transporteinrichtung auf, welche die Kunststoffvorformlinge entlang eines vorgegebenen Transportpfads transportiert. Dabei weist die Transporteinrichtung eine Vielzahl von Halteeinrichtungen zum Halten der Kunststoffvorformlinge auf. Weiterhin ist wenigstens eine erste Heizstrecke vorgesehen, welche entlang dieses Transportpfads angeordnet ist, sowie wenigstens eine zweite Heizstrecke, welche ebenfalls entlang dieses Transportpfads stromabwärts der ersten Heizstrecke angeordnet ist. Dabei weisen die Heizstrecke jeweils eine Vielzahl von unabhängig voneinander steuerbaren Heizelementen auf, welche eine Erwärmung der Kunststoffvorformlinge in mehreren in der Längsrichtung der Kunststoffvorformlinge übereinander liegenden Heizzonen mit einem sich in einer Längsrichtung der Kunststoffvorformlinge ändernden Temperaturprofil ermöglichen. Weiterhin weist die Vorrichtung eine Steuerungseinrichtung zum Steuern dieser Heizstrecke auf.

Erfindungsgemäß weist die Vorrichtung eine Eingabeeinrichtung auf, über welche durch einen Benutzer wenigstens ein Soll-Wert für einen Heizvorgang und/oder die einzelnen Heizzonen vorgebbar ist und es ist eine Prozessoreinrichtung und/oder eine Steuerungseinrichtung vorgesehen, welche die einzelnen Heizelemente unter Berücksichtigung dieses Soll-Werts ansteuert.

Während also im Stand der Technik vorgeschlagen wird, dass durch den Benutzer die einzelnen Heizelemente aktiviert oder deaktiviert werden können, schlägt die Erfindung vor, dass durch den Benutzer lediglich ein Soll-Profil oder beispielsweise erfindungsgemäß eine Temperaturvorgabe getätigt wird und erfindungsgemäß die Prozessoreinrichtung anschließend selbsttätig berechnet, in welchen Schichten, ob und wie viele Heizelemente, beispielsweise Heizlampen, zu aktivieren sind. Die Erfindung beruht auf dem Umstand, dass ein bestimmter Energieeintrag in einer Schicht sich auch aus der Anzahl der eingeschalteten Lampen einer Schicht ergibt, beispielsweise multipliziert mit dem Prozentwert der Schichtung. Dies bedeutet, dass das gleiche Ergebnis auch durch Ausschalten von Lampen oder auch durch Reduzierung eines Prozentwerts erreicht werden könnte. Damit werden nicht mehr wie bisher die einzelnen Ansteuerungen für die Kunststoffvorformlinge vorgegeben, sondern ein Soll-Wert für die zu erreichende Erwärmung.

Bei einer bevorzugten Ausführungsform sind die Sollwerte bzw. die vorgebbaren Sollwerte solche Sollwerte, die für eine absolute oder relative (insbesondere prozentuale) Zonenleistung charakteristisch sind und/oder es handelt sich bei diesen Sollwerten um absolute oder relative (prozentuale) Zonenleistungen oder um für diese Zonenleistungen charakteristische Sollwerte.

Bei einer weiteren bevorzugten Ausführungsform weist die Vorrichtung eine Prozessoreinrichtung auf, welche dazu geeignet und bestimmt ist, die für eine möglichst lange Lebensdauer der Lampen optimalen Sollwerte der einzelnen Heizelemente zu bestimmen. Diese Prozessoreinrichtung kann dabei einen Algorithmus aufweisen, der entsprechende Berechnungen durchführt.

Bei einer weiteren bevorzugten Ausführungsform bestimmt die Prozessoreinrichtung und/oder ein Algorithmus die für ein möglichst energieeffizientes Heizprofil optimalen (und/oder optimierten) Sollwerte der einzelnen Heizelemente.

Bei einer weiteren bevorzugten Ausführungsform ermöglicht die Eingabeeinrichtung die Eingabe einer Vielzahl von Sollwerten für die einzelnen Heizzonen, bevorzugt also diejenigen Zonen, die zur Erwärmung der einzelnen Bereiche bzw. Schichten der Kunststoffvorformlinge dienen. So kann die Eingabeeinrichtung etwa eine Tastatur oder einen Touchscreen eingeben über welchen der Benutzer die Sollwerte vorgeben kann. Dabei ist es möglich dass es sich bei den Sollwerten um eine (insbesondere zonenabhängige) Temperatur der Kunststoffvorformlinge handelt. Diese kann dabei bevorzugt stufenlos eingegeben werden.

Zusätzlich oder alternativ wäre es auch möglich, dass es sich bei den Sollwerten um Leistungswerte für eine gesamte bereichs- bzw. zonenabhängige Heizleistung handelt.

Vorteilhaft handelt es sich bei der Erwärmungseinrichtung um eine Infraroterwärmungseinrichtung, das heißt die Heizstrecken sind insbesondere Infrarot-Heizstrecken. Bei einer bevorzugten Ausführungsform handelt es sich bei den Heizelementen um Lampen, die insbesondere in einer Längsrichtung der Kunststoffvorformlinge übereinander angeordnet sind. Bevorzugt erstrecken sich diese Heizelemente bzw. Lampen auch in der Transportrichtung der Kunststoffvorformlinge.

Bei einer weiteren vorteilhaften Ausführungsform weist die Vorrichtung eine Dreheinrichtung zum Drehen der Kunststoffvorformlinge bezüglich deren Längsrichtung auf. Anstelle von Infrarotheizelementen könnten auch Mikrowellenheizelemente vorgesehen sein.

Bei einer bevorzugten Ausführungsform weist die Vorrichtung eine der Erwärmungseinrichtung nachgeordnete Vorrichtung zum Umformen von Kunststoffvorformlingen auf.

Bei der Vorrichtung zum Umformen von Kunststoffvorformlingen zu Kunststoffbehältnissen handelt es sich bevorzugt um eine Blasmaschine. Dies bedeutet, dass die Kunststoffvorformlinge zunächst in einer Heizstrecke thermisch konditioniert und anschließend durch Beaufschlagung mit einem flüssigen oder gasförmigen Medium expandiert werden. Das fließfähige Medium steht bevorzugt unter Druck. Für die Zuführung des unter Druck stehenden Mediums weist die Vorrichtung eine Blasdüse auf, welche an eine Mündung der Kunststoffvorformlinge dichtend anlegbar ist, um die Kunststoffvorformlinge so mit flüssigem oder gasförmigem Medium zu expandieren. Daneben ist bevorzugt auch eine Ventilanordnung vorgesehen, welche die Zuführung der Blasluft an die Kunststoffvorformlinge steuert.

Bevorzugt handelt es sich bei der Blasmaschine um eine Streckblasmaschine, was bedeutet, dass die Vorformlinge vor und/oder während der Expansion mittels einer Reckstange in Längsrichtung gedehnt werden. Die Blasstationen weisen dabei jeweils Reckstangen auf, welche in die Kunststoffvorformlinge einführbar sind und die Kunststoffvorformlinge in ihrer Längsrichtung dehnen. Die Reckstangen weisen dabei bevorzugt einen elektrischen Antrieb auf.

Bei einer vorteilhaften Ausführungsform ist eine Vielzahl von Blasstationen an einem gemeinsamen beweglichen Träger angeordnet. Bei diesem Träger handelt es sich dabei insbesondere um einen drehbaren Träger. Die Blasstationen weisen jeweils eine Blasformeinrichtung auf, welche bevorzugt einen Hohlraum ausbilden, innerhalb dessen die Kunststoffvorformlinge zu den Kunststoffbehältnissen expandierbar sind. Diese Blasformeinrichtungen sind dabei bevorzugt mehrteilig ausgebildet und weisen zwei Blasformhälften und eine Bodenform auf. Bevorzugt sind diese Blasformhälften lösbar an einer Formträgerschale oder an den Blasformträgern angeordnet. Die Blasformträger sind bezüglich einander schwenkbar, um die Blasformeinrichtungen zu öffnen und zu schließen. Zudem weist der Blasformträger Verriegelungsmechanismen auf, um die Formhälften während des Blasvorgangs gegeneinander zu verriegeln.

Besonders bevorzugt ist die Blasmaschine bzw. sind der Träger und die Blasformanordnungen innerhalb eines Reinraums angeordnet, welcher die Blasformmaschine gegenüber einer unsterilen Umgebung abgrenzt. Antriebseinrichtungen für die Verschließung, Verriegelung und/oder Öffnung der Blasformen sind dabei bevorzugt außerhalb des Reinraums angeordnet.

Die Blasformeinrichtungen werden bevorzugt innerhalb des Reinraums transportiert. Der Reinraum wird bevorzugt von mehreren Wandungen begrenzt. Bevorzugt wird der Reinraum dabei von wenigstens einer stehenden Wandung und einer sich gegenüber dieser stehenden Wandung bewegenden Wandung begrenzt. Der Reinraum grenzt die Blasformen insbesondere von einer unsterilen Umgebung ab. Vorteilhaft ist der Reinraum ring- oder torusartig um die Blasstationen bzw. Umformungsstationen und/oder den Transportpfad der Kunststoffbehältnisse ausgebildet.

Bei einer weiteren bevorzugten Ausführungsform erlaubt die Prozessoreinrichtung und/oder die Steuerungseinrichtung bzw. die Vorrichtung auch eine Änderung der Transportgeschwindigkeit der Kunststoffvorformlinge.

Bevorzugt sind die Heizstrecken stationär angeordnet und die Kunststoffvorformlinge werden an diesen Heizstrecken bzw. den Heizelementen vorbei transportiert.

Bei einer weiteren vorteilhaften Ausführungsform weist die Vorrichtung eine Messeinrichtung zum Messen einer Leistung der einzelnen Heizelemente auf. Bei einer bevorzugten Ausführungsform ermöglicht die Eingabeeinrichtung die Eingabe einer Vielzahl von Soll-Werten für die einzelnen Heizzonen bzw. -schichten. So kann beispielsweise der Benutzer vorgeben, welche Temperatur die Kunststoffvorformlinge in bestimmten Schichten aufweisen sollen.

Bei einer bevorzugten Ausführungsform weist die Vorrichtung eine Vielzahl von Heizstrecken auf, die entlang des Transportpfads der Kunststoffvorformlinge hintereinander angeordnet sind. Dabei können beispielsweise mehr als vier, bevorzugt mehr als acht, bevorzugt mehr als zehn, bevorzugt mehr als zwölf derartige Heizstrecken vorgesehen sein. Vorteilhaft weist die Vorrichtung jedoch weniger als 50, bevorzugt weniger als 40 und besonders bevorzugt weniger als 30 derartige Heizstrecken auf.

Bevorzugt weist die Vorrichtung wenigstens zwei in der Längsrichtung übereinander angeordnete Heizelemente auf, bevorzugt wenigstens drei, bevorzugt wenigstens vier und besonders bevorzugt wenigstens fünf. Bevorzugt weist die Heizstrecke weniger als 15 in der Längsrichtung der Kunststoffvorformlinge übereinander angeordnete Heizelemente auf, bevorzugt weniger als 14, bevorzugt weniger als 13 und besonders bevorzugt weniger als zwölf.

Bei einer weiteren vorteilhaften Ausführungsform sind die Heizelemente jeder Heizstrecke unabhängig voneinander steuerbar. Auf diese Weise ist es beispielsweise wieder möglich, eine Matrix zu bilden, wobei beispielsweise in einer x-Richtung dieser Matrix die einzelnen Heizstrecken dargestellt sind und in der y-Richtung die übereinander angeordneten Heizelemente (jeder einzelnen Heizstrecke).

Bei einer weiteren vorteilhaften Ausführungsform weist die Vorrichtung eine Temperaturmesseinrichtung auf, welche eine Ist-Temperatur der Kunststoffvorformlinge misst. Bevorzugt steuert die Prozessoreinrichtung die Erwärmung der Kunststoffvorformlinge auf Basis auch dieser gemessenen Temperatur. Weiterhin weist die Vorrichtung eine Steuerungseinrichtung auf, welche wenigstens das erste Heizelement in Abhängigkeit von einer von der Temperaturmesseinrichtung gemessenen Temperatur der Kunststoffvorformlinge steuert. Dabei ist es möglich, dass diese Temperaturmesseinrichtung im Bereich eines Einlaufs der Kunststoffvorformlinge vor der Vorrichtung angeordnet ist. Es wäre jedoch auch möglich, dass eine derartige Temperaturmesseinrichtung in einem mittleren Bereich der Erwärmungseinrichtung angeordnet ist.

Bei einer weiteren vorteilhaften Ausführungsform steuert die Steuerungseinrichtung eine Leistung der Heizelemente zwischen wenigstens zwei Grenzwerten. So ist es aus dem Stand der Technik bekannt, dass die jeweiligen Heizelemente, beispielsweise Lampen, einen Leistungsbereich aufweisen, in dem sie besonders günstig oder nachhaltig oder dergleichen betrieben werden. Die Steuerungseinrichtung ist derart ausgelegt, dass sie auswählt, wie viele Lampen zu betreiben sind, um diese günstigen Betriebsbedingungen zu erreichen. So ist vorgesehen, dass die einzelnen Heizelemente, beispielsweise Lampen, unter idealen Bedingungen betrieben werden, um so eine Energieeinsparung zu erreichen.

So wäre es beispielsweise möglich, dass bei dem höheren Bedarf mehr Lampen, allerdings mit geringerer Leistung, betrieben werden. Bevorzugt werden die Lampen in einem Leistungsbereich betrieben, der oberhalb von 30 % ihrer Nennleistung, bevorzugt oberhalb von 40 % ihrer Nennleistung und besonders bevorzugt oberhalb von 50 % ihrer Nennleistung liegt. Besonders bevorzugt werden die Heizelemente bzw. Lampen hier in einem Leistungsbereich betrieben, der unterhalb von 90 % und besonders bevorzugt unterhalb von 80 % der Nennleistung liegt.

Bei einer weiteren vorteilhaften Ausführungsform weist die Vorrichtung eine zweite Temperaturmesseinrichtung auf, welche zum Messen einer Temperatur der Kunststoffvorformlinge dient. Dabei ist es möglich, diese zweite Temperaturmesseinrichtung beispielsweise an einem Auslauf der Heizstrecke bzw. des Ofens vorzusehen. Auf diese Weise kann ermittelt werden, auf welche Temperaturen die Kunststoffvorformlinge erwärmt werden. Auch kann auf Basis der jeweiligen Temperaturdifferenz ermittelt werden, wie und gegebenenfalls mit welcher Leistung die einzelnen Heizelemente zu betreiben sind.

Bei einer weiteren vorteilhaften Ausführungsform sind Heizstrecken oder Gruppen von Heizstrecken, welche aktiviert werden sollen, auswählbar. So kann der Benutzer auswählen, ob beispielsweise eher Heizstrecken am Anfang der Transportstrecke aktiviert werden sollen oder am Ende der Transportstrecke. Auch wäre es möglich, dass der Benutzer beispielsweise wählen kann, dass nur bestimmte Heizstrecken aktiviert werden sollen. Auch ist es möglich, dass einzelne Heizelemente der jeweiligen Heizstrecken aktiviert oder deaktiviert werden. Beispielsweise bloß die obersten Elemente.

Durch die hier beschriebene Steuerung kann auch verhindert werden, dass die Gefahr besteht, dass der optimale Betriebspunkt der Lampen bzw. Heizelemente verlassen wird (sowohl nach oben als auch nach unten), was sich erheblich auf die Lebensdauer der Lampen auswirken kann.

Eine optimale Kombination der Parameter (insbesondere Anzahl und Lage der eingeschalteten Lampen und Schichtung der Lampen) wird automatisiert. Dabei ist bevorzugt ein Algorithmus vorgesehen, der berücksichtigt, dass die Lampenleistung in einem bestimmten Bereich liegt, sodass die einzelnen Heizelemente bzw. Lampen unter optimalen Betriebstemperaturen betrieben werden.

Dabei ist es möglich, dass für die Betriebstemperaturen ein unterer und/oder ein oberer Grenzwert festgelegt wird und die Lampenleistung derart ausgelegt wird, dass sich die Lampentemperatur in diesem Bereich bewegt. Dabei ist es möglich, dass die Lampentemperatur gemessen wird, beispielsweise eine Sockeltemperatur der Lampen.

Diese optimalen Betriebsbedingungen können beispielsweise eine Sockeltemperatur oder die Temperatur des Glaskolbens der Lampen sein oder aber diese Werte können berücksichtigt werden. So kann sich beispielsweise die Sockeltemperatur der Lampe in einem bestimmten Temperaturbereich zwischen 150°C und 450°C bewegen, besonders bevorzugt in einem Temperaturbereich zwischen 150°C und 350°C. Eine Temperatur des Glaskolbens kann bevorzugt unter 900°C liegen.

Bevorzugt ist eine Leistungssteuerungseinrichtung vorgesehen, welche die Lampenleistung auch unter Berücksichtigung der Betriebstemperatur der Lampen steuert.

Bevorzugt bewegt sich die Leistung der Heizelemente bzw. Lampen in einem Bereich von 20% - 100% der Nennleistung und besonders bevorzugt in einem Bereich zwischen 30% und 80% der Nennleistung, es gilt also bevorzugt:

$$30\% <= (P_{Lampe\_y}/P_{nenn\_y}) <= 80\% \quad \text{oder: } 30\% <= (\%_{Temperaturregler} * \%_{Schicht\_y}) <= 80\%$$

(wobei y die Schicht bzw. den Bereich beispielsweise von 1 bis 9 bezeichnet)

Damit wäre es auch möglich, die Lampenleistungen für jede einzelne Schicht separat zu wählen.

Ein Vorteil der hier beschriebenen Vorgehensweise besteht darin, dass die bisherige Lampenmatrix komplett entfallen kann. Andererseits werden jedoch bevorzugt die anteilig eingeschalteten Lampen bzw. Heizelemente in die Schichtung integriert.

Früher wurden die Werte $\%_{Schicht\_Y}$ berücksichtigt, nunmehr die Werte $\%_{Schicht\_Y} * (\Sigma Ein_X/Gesamt_Y) = \%_{Schicht\_Y\_NEU}$

Bevorzugt werden - insbesondere iterativ - die Parameter prozentuale Stellgröße und Anzahl der eingeschalteten Heizelemente unter Berücksichtigung des Bereichs und der Bedienereingabe aufeinander abgestimmt.

Wie erwähnt können als weitere Parameter die Positionen der eingeschalteten Lampen (d.h. die einzelnen Lampen der Heizstrecken) über die Ofenlänge gegeben sein. So könnten sich beispielsweise die eingeschalteten Lampen gleichmäßig über die Ofenlänge verteilen, es wäre jedoch auch möglich, dass die Lampen bevorzugt am Ofeneinlauf und bevorzugt am Ofenauslauf eingeschaltet werden. Auch diese Parameter können über das Ofenmodell abgebildet werden. Als Entscheidungsgrößen können beispielsweise das Vorhandensein und die Größe von Zwischenmodulen, wie beispielsweise Sterilisationsmodule oder Module, die eine in Umfangsrichtung abweichende Erwärmung der Kunststoffvorformlinge ermöglichen, gelten. Weitere mögliche Parameter können die Maschinengeschwindigkeit, die Ausgleichszeit oder auch ein Gewicht der Kunststoffvorformlinge sein. Mit der hier beschriebenen Vorgehensweise wird insgesamt die Prozessfindung erleichtert und auch die Lebensdauer der Lampen kann erhöht werden. Als Stellgröße wird, wie oben erwähnt, eine Solltemperatur der Kunststoffvorformlinge und insbesondere eine zonenweise Solltemperatur der Kunststoffvorformlinge verwendet.

Die vorliegende Erfindung ist weiterhin auf ein Verfahren zum Erwärmen von Kunststoffvorformlingen gerichtet, wobei mit einer Transporteinrichtung die Kunststoffvorformlinge entlang eines vorgegebenen Transportpfads transportiert werden und wobei die Transporteinrichtung eine Vielzahl von Halteelementen zum Halten der Kunststoffvorformlinge aufweist und wobei wenigstens eine erste Heizstrecke entlang dieses Transportpfads angeordnet ist, sowie wenigstens eine zweite Heizstrecke, welche ebenfalls entlang dieses Transportpfads und stromabwärts der ersten Heizstrecke angeordnet ist. Diese Heizstrecken erwärmen bevorzugt die Kunststoffvorformlinge, wobei die Heizstrecken jeweils eine Vielzahl von unabhängig voneinander steuerbaren Heizelementen aufweisen, welche die Kunststoffvorformlinge in mehreren in der Längsrichtung der Kunststoffvorformlinge übereinanderliegenden Heizzonen mit einem sich in einer Längsrichtung der Kunststoffvorformlinge ändernden Temperaturprofil erwärmen, wobei eine Steuerungseinrichtung diese Heizstrecken steuert.

Es wird darauf hingewiesen, dass im Rahmen der vorliegenden Erfindung anstelle des Begriffs der Heizstrecke auch der Begriff der Heizeinrichtung verwendet werden kann, da, wie oben erwähnt sich einer bestimmten Heizeinrichtung eine bestimmte Heizstrecke zuordnen lässt.

Erfindungsgemäß weist die Vorrichtung eine Eingabeeinrichtung auf, über welche durch den Benutzer wenigstens teilweise ein Soll-Wert für den Heizvorgang vorgebbar ist und eine Prozessoreinrichtung steuert - bevorzugt automatisch - die einzelnen Heizelemente unter Berücksichtigung dieses Soll-Werts an. Bevorzugt handelt es sich hierbei um einen Sollwert und insbesondere einen optimalen und/oder optimierten Sollwert einer Lampenleistung (bzw. einer Leistung der jeweiligen Heizelemente) und/oder eine Sollwert, der für diese Lampenleistung charakteristisch ist.

Es wird daher auch verfahrensseitig vorgeschlagen, dass der Benutzer nicht mehr einzelne Heizelemente ansteuert, sondern eine Soll-Vorgabe tätigt, beispielsweise eine Wunschtemperatur am Ausgang des Ofens. Es wäre jedoch auch möglich, dass diese Sollvorgabe nicht durch den Benutzer getätigt wird, sondern durch eine nachgeordnete Steuerungseinrichtung, beispielsweise eine nachgeordnete Blasformmaschine, die in Abhängigkeit von geltenden Prozessparametern die Erwärmungseinrichtung entsprechend ansteuert.

Bei einer bevorzugten Ausführungsform sind die vorgebbaren Sollwerte die pro Zone in den Kunststoffvorformling eingebrachten Energien und/oder die pro Zone zu erreichenden Temperaturen der Kunststoffvorformlinge. In diesem Falle werden bevorzugt die Leistungen unter Berücksichtigung der einzubringenden Energien oder der pro Zone zu erreichenden Temperaturen der Kunststoffvorformlinge ermittelt. Es wird darauf hingewiesen, dass im Rahmen dieser Anmeldung die Begriffe Preform und Kunststoffvorformling synonym verwendet werden.

Bei einem bevorzugten Verfahren wird wenigstens zeitweise und bevorzugt wenigstens einmal eine Temperatur der Kunststoffvorformlinge gemessen. Bevorzugt wird eine Ist-Temperatur der Kunststoffvorformlinge, besonders bevorzugt an einem Auslauf der Erwärmungseinrichtung gemessen. Bei einem bevorzugten Verfahren werden die einzelnen Heizstrecke und insbesondere die einzelnen Heizelemente unter Berücksichtigung einer gemessenen Ist-Temperatur der Kunststoffvorformlinge gesteuert. Bevorzugt wird die Temperatur der Kunststoffvorformlinge berührungslos gemessen. Bei einem weiteren bevorzugten Verfahren wird die Temperatur der Kunststoffvorformlinge auch in Abhängigkeit von einer Längsrichtung der Kunststoffvorformlinge gemessen. Bevorzugt ist daher wenigstens eine Temperaturmesseinrichtung vorgesehen, welche die Bestimmung der Temperatur der Kunststoffvorformlinge auch zonen- oder bereichsabhängig erlaubt.

Weitere Vorteile und Ausführungsformen ergeben sich aus den beigefügten Zeichnungen:

Darin zeigen:

Fig. 1      Eine Darstellung einer erfindungsgemäßen Vorrichtung zum Erwärmen von Kunststoffvorformlingen;

Fig. 2      Eine Darstellung einer Heizstrecke;

Fig. 3      Eine Darstellung einer Steuerung nach dem internen Stand der Technik der Anmelderin;

Fig. 4      Eine Darstellung für Eingabemöglichkeiten einer erfindungsgemäßen Vorrichtung;

Fig. 5a     Eine erste Veranschaulichung einer Umsetzung einer Benutzereingabe durch die erfindungsgemäße Vorrichtung;

Fig. 5b     Eine weitere Darstellung einer Umsetzung einer Benutzereingabe durch die erfindungsgemäße Vorrichtung.

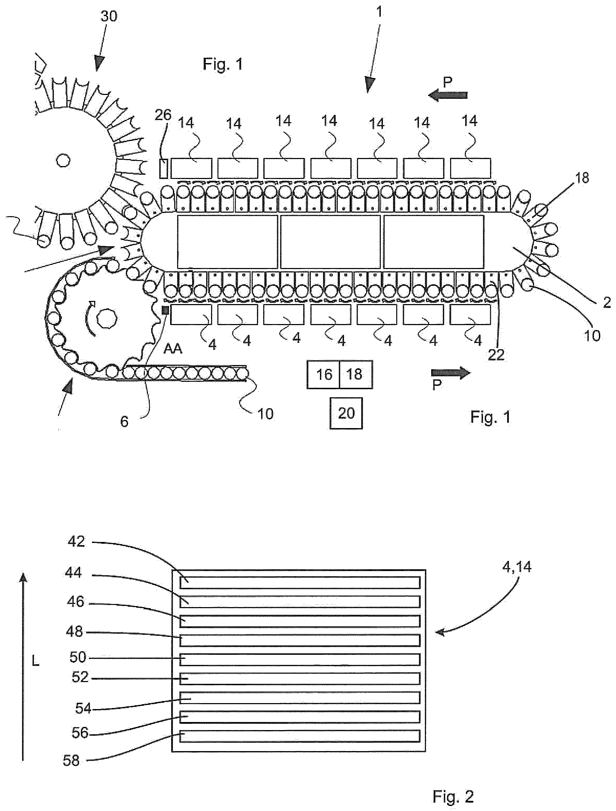

Figur 1 zeigt eine erfindungsgemäße Vorrichtung 1 zum Erwärmen von Kunststoffvorformlingen 10. Dabei werden die Kunststoffvorformlinge 10 über eine Zuführeinrichtung 12, wie beispielsweise einen Eintaktstern, der eigentlichen Erwärmungseinrichtung zugeführt. Diese Erwärmungseinrichtung weist eine Transporteinrichtung 2 auf, an der eine Vielzahl von Halteelementen 22 angeordnet ist. Diese Halteelemente 22 erlauben dabei auch jeweils eine Drehung der Kunststoffvorformlinge bezüglich ihrer Längsachsen. Die Kunststoffvorformlinge werden entlang eines Transportpfads P geführt und anschließend an eine weitere Transporteinrichtung 30 übergeben. An die Transporteinrichtung 30 kann sich eine Umformungseinrichtung zum Umformen von Kunststoffvorformlingen zu Kunststoffbehältnissen anschließen.

Die Bezugszeichen 4 beziehen sich auf eine Vielzahl von Heizstrecken, die entlang eines unteren Zweigs des Transportpfads angeordnet sind und die Bezugszeichen 14 auf eine Vielzahl von Heizstrecken, die entlang eines oberen Zweigs der Transporteinrichtung angeordnet sind.

Das Bezugszeichen 6 kennzeichnet eine erste Temperaturmesseinrichtung, die hier an einem Ofeneinlauf angeordnet ist. Das Bezugszeichen 26 kennzeichnet eine zweite Temperaturmesseinrichtung, welche am Ende des Transportpfads der Kunststoffvorformlinge angeordnet ist. Daneben könnte auch eine weitere Temperaturmesseinrichtung beispielsweise in einem Umlenkbereich vorgesehen sein, in dem die Kunststoffvorformlinge von dem unteren Zweig in den oberen Zweig überführt werden.

Das Bezugszeichen 16 kennzeichnet eine Eingabeeinrichtung, über welche der Benutzer vorgeben kann, welche Erwärmungen der Kunststoffvorformlinge erwünscht. Diese Eingabeeinrichtung kann beispielsweise einen Touchscreen oder dergleichen aufweisen.

Das Bezugszeichen 18 kennzeichnet eine Prozessoreinrichtung, welche auf Basis der Benutzereingaben eine Ansteuerung der einzelnen Heizstrecken ermittelt. Daneben weist die Vorrichtung eine Steuerungseinrichtung 20 auf, welche dazu geeignet und bestimmt ist, die einzelnen Heizstrecken 4 und 14 anzusteuern.

Figur 2 zeigt eine schematische Darstellung einer Heizstrecke 4, 14. Diese weist eine Vielzahl von in der Längsrichtung L der Kunststoffvorformlinge übereinander angeordnete Heizelemente auf. Diese Heizelemente sind hier als Strahler 42, 44, 46, 48, 50, 52, 54, 56 und 58 ausgebildet. Diese einzelnen Strahler sind dabei unabhängig voneinander betreibbar und insbesondere auch unabhängig von der Steuerungseinrichtung 20 ansteuerbar.

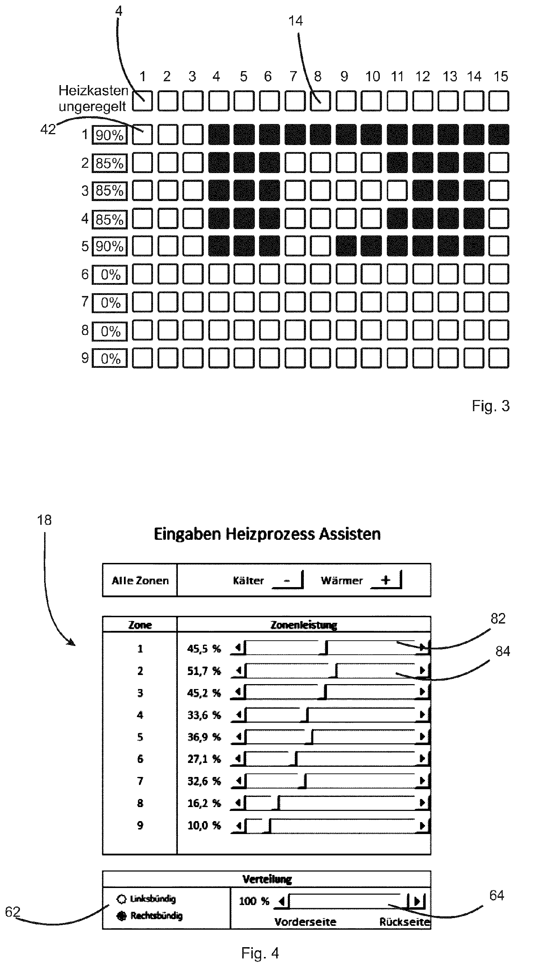

Figur 3 zeigt eine Darstellung eines Arrays aus dem internen Stand der Technik der Anmelderin. Dabei ist wiederum eine Vielzahl von Heizstrecken 4 und 14 gezeigt. Diese weisen jeweils die in y-Richtung übereinander angeordneten Heizelemente 42, 44, 46, 48, 50, 52, 54, 56 und 58 auf. Diese Heizelemente sind dabei einzeln aktivierbar und insbesondere auch einzeln mit den jeweils am linken Rand angegebenen Leistungen 90 %, 85 % usw. aktivierbar. In dem in Figur 3 gezeigten Beispiel sind die untersten vier Heizelemente jeweils nicht aktiviert, was damit zusammenhängen kann, dass kürzere Kunststoffvorformlinge erwärmt werden, die nicht in den Bereich dieser unteren Heizelemente ragen.

Figur 4 zeigt eine Darstellung einer Eingabeeinrichtung, über die der Benutzer Vorgaben zur Erwärmung machen kann. Dabei sind hier die einzelnen Zonen 1 - 9 aufgeführt, welche zu den jeweiligen Heizelementen 42, 44, 46, 48, 50, 52, 54, 56 und 58 korrespondieren. Man erkennt, dass der Benutzer mittels Eingabeelementen 82 und 84 jeweils eine Zonenleistung in Prozent anwählen kann. Die Steuerungseinrichtung bzw. die Prozessoreinrichtung ermittelt daraufhin selbsttätig, welche der einzelnen Heizelemente bzw. Heizstrecken aktiviert werden, um in möglichst günstiger Weise die gewünschte Erwärmung bzw. Zonenleistung zu erreichen.

Daneben kann ein Eingabeelement 62 vorhanden sein, über welches der Benutzer wählen kann, ob er eine rechts- oder linksbündige Beheizung wünscht, das heißt in welchen Bereichen des Transportpfads die Kunststoffvorformlinge erwärmt werden sollen. Über ein Eingabeelement 64 kann der Benutzer auch noch festlegen, in welchem Bereich der Erwärmungseinrichtung die Erwärmung stattfinden soll.

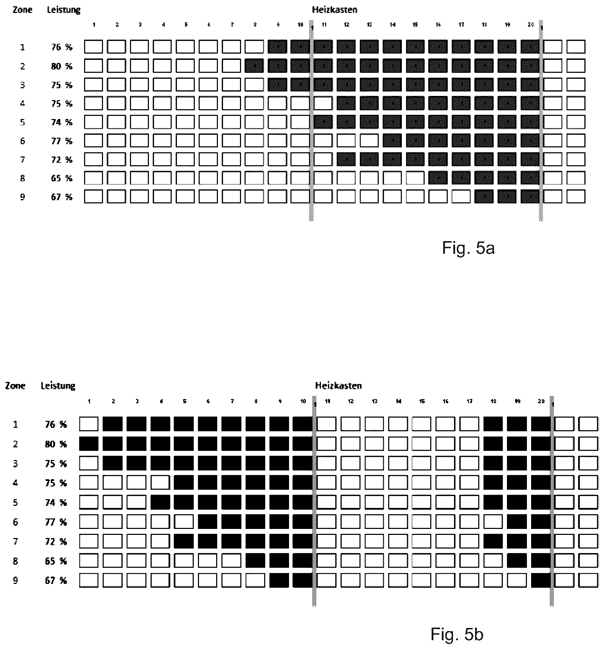

Die Auswahl zwischen Vorder- und Rückseite ermöglicht die die Verteilung der aktiven Heizelemente auf die beiden Transportpfade. In der nachfolgenden Figur 5a erfolgen im Wesentlichen 100% der Erwärmung über die Rückseite und in Figur 5b ca. 30% .

Links- und rechtsbündig gibt dagegen die Ausrichtung auf der jeweiligen Seite an.

Eine rechtsbündige Erwärmung bedeutet, dass die Energie zu einem möglichst späten Zeitpunkt eingebracht wird (dies ist z.B. vorteilhaft bei dünnwandigen Preformen, damit diese nicht überhitzen). Eine linksbündige Erwärmung bedeutet, dass die Energie frühzeitig eingebracht wird und dann genügend Ausgleichszeit zur Verfügung steht, damit sich die Temperatur über die Dicke der Wandung des Kunststoffvorformlings verteilen kann (das kann erforderlich sein für dickwandige Kunststoffvorformlinge oder farbige Kunststoffvorformlinge).

Figur 5a zeigt eine Ausgestaltung, bei der eine Erwärmung insbesondere in einem Endbereich der Heizstrecke erfolgen soll. Man erkennt hier, dass hier insbesondere die Heizkästen bzw. die Heizstrecken 9 - 20 aktiviert sind. In diesem Falle war also gewünscht, dass die Kunststoffvorformlinge insbesondere gegen Ende ihres Transportpfads erwärmt wird.

Bei der in Figur 5b gezeigten Ausgestaltung war gewünscht, dass eine Erwärmung überwiegend im ersten Bereich der Heizstrecke erfolgt, daneben aber auch in einem Endabschnitt der Heizstrecke. Entsprechend werden hier die Heizstrecken bzw. Heizkästen 1 - 10 aktiviert und andererseits erst wieder die Heizstrecken 18 - 20.

**Bezugszeichenliste**

| | |
|---|---|
| 1 | erfindungsgemäße Vorrichtung |
| 2 | Transporteinrichtung |
| 4 | Heizstrecken |
| 6 | erste Temperaturmesseinrichtung |
| 10 | Kunststoffvorformlinge |
| 12 | Zuführeinrichtung |
| 14 | Heizstrecken |
| 16 | Eingabeeinrichtung |
| 18 | Prozessoreinrichtung |
| 20 | Steuerungseinrichtung |
| 22 | Halteelemente |
| 26 | zweite Temperaturmesseinrichtung |
| 30 | Transporteinrichtung |
| 42, 44, 46 | Strahler, Heizelement |
| 48, 50, 52 | Strahler, Heizelement |
| 54, 56, 58 | Strahler, Heizelement |
| 62, 64 | Eingabeelement |
| 82, 84 | Eingabeelement |
| L | Längsrichtung der Kunststoffvorformlinge |
| P | Transportpfad |

**Patentansprüche**

**1.** Vorrichtung (1) zum Erwärmen von Kunststoffvorformlingen (10) mit einer Transporteinrichtung (2) welche die Kunststoffvorformlinge (10) entlang eines vorgegebenen Transportpfads (P) transportiert, wobei diese Transporteinrichtung (2) einen Vielzahl von Halteelementen (22) zum Halten der Kunststoffvorformlinge (10) aufweist, und mit wenigstens einer ersten Heizstrecke (4), welche entlang dieses Transportpfads (P) angeordnet ist sowie wenigstens einer zweiten Heizstrecke (14) welches entlang dieses Transportpfads (P) stromabwärts der ersten Heizstrecke (4) angeordnet ist, wobei die Heizstrecken (4, 14) jeweils eine Vielzahl von unabhängig voneinander steuerbaren Heizelementen (42, 44, 46, 48, 50, 52, 54, 56, 58) aufweisen, welche eine Erwärmung der Kunststoffvorformlinge in mehreren in der Längsrichtung der Kunststoffvorformlinge übereinander liegenden Heizzonen mit einem sich in einer Längsrichtung der Kunststoffvorformlinge (10) ändernden Temperaturprofil ermöglichen, wobei die Vorrichtung (1) eine Steuerungseinrichtung zum Steuern dieser Heizstrecken aufweist, wobei die Vorrichtung (1) eine Eingabeeinrichtung (16) aufweist, über welche durch den Benutzer wenigstens ein Sollwert für die einzelnen Heizzonen vorgebbar ist und eine Steuerungseinrichtung (20) vorgesehen ist, welche automatisch die einzelnen Heizelemente (42, 44, 46, 48, 50, 52, 54, 56, 58) unter Berücksichtigung eines Sollwerts der Lampenleistung und/oder eines für die Lampenleistung charakteristischen Sollwerts ansteuert,

**dadurch gekennzeichnet, dass** die Vorrichtung so eingerichtet ist, dass durch den Benutzer lediglich eine Temperaturvorgabe getätigt wird und eine Prozessoreinrichtung (18) anschließend selbsttätig berechnet, in welchen Schichten, ob und wie viele Heizelemente (42, 44, 46, 48, 50, 52, 54, 56, 58) bzw. Heizlampen zu aktivieren sind.

2. Vorrichtung (1) nach Anspruch 1,
   **dadurch gekennzeichnet, dass**
   die vorgebbaren Sollwerte absolute oder relative (prozentuale) Zonenleistungen sind.

3. Vorrichtung (1) nach einem der vorangegangenen Ansprüche,
   **dadurch gekennzeichnet, dass**
   die vorgebbaren Sollwerte die pro Zone in die Preform eingebrachten Energien sind und/oder die pro Zone zu erreichenden Preformtemperaturen sind.

4. Vorrichtung (1) nach einem der vorangegangenen Ansprüche,
   **dadurch gekennzeichnet, dass**
   die Prozessoreinrichtung (18) dazu geeignet und bestimmt ist, die für eine möglichst lange Lebensdauer der Lampen optimalen Sollwerte der einzelnen Heizelemente (42, 44, 46, 48, 50, 52, 54, 56, 58) zu bestimmen.

5. Vorrichtung (1) nach einem der vorangegangenen Ansprüche,
   **dadurch gekennzeichnet, dass**
   die Prozessoreinrichtung (18) und/oder ein Algorithmus die für ein möglichst energieeffizientes Heizprofil optimalen Sollwerte der einzelnen Heizelemente (42, 44, 46, 48, 50, 52, 54, 56, 58) bestimmt.

6. Vorrichtung (1) nach Anspruch 1,
   **dadurch gekennzeichnet, dass**
   die Eingabeeinrichtung (16) die Eingabe einer Vielzahl von Sollwerten für die einzelnen Heizzonen ermöglicht.

7. Vorrichtung (1) nach wenigstens einem der vorangegangenen Ansprüche,
   **dadurch gekennzeichnet, dass**
   die Vorrichtung (1) eine Vielzahl von Heizelementen (42, 44, 46, 48, 50, 52, 54, 56, 58) aufweist, die entlang des Transportpfads der Kunststoffvorformlinge (10) hintereinander angeordnet sind.

8. Vorrichtung (1) nach dem vorangegangenen Anspruch,
   **dadurch gekennzeichnet, dass**
   die Heizelemente (42, 44, 46, 48, 50, 52, 54, 56, 58) jeder Heizstrecke (4, 14) unabhängig voneinander steuerbar sind.

9. Vorrichtung (1) nach wenigstens einem der vorangegangenen Ansprüche,
   **dadurch gekennzeichnet, dass**
   die Vorrichtung (1) eine erste Temperaturmesseinrichtung (6) aufweist, welche eine Ist-Temperatur ($T_{IST}$) der Kunststoffvorformlinge (10) misst.

10. Vorrichtung (1) nach wenigstens einem der vorangegangenen Ansprüche,
    **dadurch gekennzeichnet, dass**
    die Steuerungseinrichtung (20) eine Leistung der Heizelemente (42, 44, 46, 48, 50, 52, 54, 56, 58) zwischen wenigstens zwei Grenzwerten steuert.

11. Vorrichtung (1) nach wenigstens einem der vorangegangenen Ansprüche,
    **dadurch gekennzeichnet, dass**
    die Vorrichtung (1) eine zweite Temperaturmesseinrichtung (26) zum Messen einer Temperatur der Kunststoffvorformlinge (10) aufweist.

**12.** Vorrichtung (1) nach wenigstens einem der vorangegangenen Ansprüche,
**dadurch gekennzeichnet, dass**
Heizelemente (42, 44, 46, 48, 50, 52, 54, 56, 58) oder Gruppen von Heizelementen (42, 44, 46, 48, 50, 52, 54, 56, 58) welche aktiviert werden, auswählbar sind.

**13.** Verfahren zum Erwärmen von Kunststoffvorformlingen (10) wobei mit einer Transporteinrichtung (2) die Kunststoffvorformlinge (10) entlang eines vorgegebenen Transportpfads (P) transportiert werden, wobei diese Transporteinrichtung (2) einen Vielzahl von Halteelementen (22) zum Halten der Kunststoffvorformlinge (10) aufweist, und wobei wenigstens eine erste Heizstrecke (4), welches entlang dieses Transportpfads (P) angeordnet ist sowie wenigstens eine zweiten Heizstrecke (14) welches entlang dieses Transportpfads (P) stromabwärts der ersten Heizstrecke (4) angeordnet ist, die Kunststoffvorformlinge erwärmt wobei die Heizstrecke (4, 14) jeweils eine Vielzahl von unabhängig voneinander steuerbaren Heizelementen (42, 44, 46, 48, 50, 52, 54, 56, 58) aufweisen, welche die Kunststoffvorformlinge in mehreren in der Längsrichtung der Kunststoffvorformlinge übereinander liegenden Heizzonen mit einem sich in einer Längsrichtung der Kunststoffvorformlinge (10) ändernden Temperaturprofil erwärmen, wobei eine Steuerungseinrichtung diese Heizelemente steuert, wobei eine Eingabeeinrichtung (16) vorgesehen ist, über welche durch den Benutzer wenigstens ein Sollwert für einen Heizvorgang vorgebbar ist und eine Prozessoreinrichtung (18) die einzelnen Heizelemente unter Berücksichtigung dieses Sollwerts ansteuert und die einzelnen Heizelemente (42, 44, 46, 48, 50, 52, 54, 56, 58) unter Berücksichtigung eines Sollwerts der Lampenleistung und/oder eines für die Lampenleistung charakteristischen Sollwerts ansteuert,
**dadurch gekennzeichnet, dass**
durch den Benutzer lediglich eine Temperaturvorgabe getätigt wird und die Prozessoreinrichtung (18) anschließend selbsttätig berechnet, in welchen Schichten, ob und wie viele Heizelemente (42, 44, 46, 48, 50, 52, 54, 56, 58) bzw. Heizlampen zu aktivieren sind.

**14.** Verfahren nach Anspruch 13,
**dadurch gekennzeichnet, dass**
wenigstens zeitweise eine Temperatur der Kunststoffvorformlinge (10) gemessen wird.

**Claims**

**1.** Apparatus (1) for heating plastic preforms (10), with a transport device (2) which transports the plastic preforms (10) along a predefined transport path (P), wherein this transport device (2) has a plurality of holding elements (22) for holding the plastic preforms (10), and with at least one first heating section (4) which is arranged along said transport path (P), and at least one second heating section (14) which is arranged along said transport path (P) downstream of the first heating section (4), wherein the heating sections (4, 14) each comprise a plurality of independently controllable heating elements (42, 44, 46, 48, 50, 52, 54, 56, 58) which allow heating of the plastic preforms in several heating zones, lying above each other in the longitudinal direction of the plastic preforms, with a temperature profile which changes in the longitudinal direction of the plastic preforms (10), wherein the apparatus (1) comprises a control device for controlling these heating sections, wherein the apparatus (1) has an input device (16) via which a user can predefine a set value for the individual heating zones, and a control device (20) is provided which automatically actuates the individual heating elements (42, 44, 46, 48, 50, 52, 54, 56, 58) taking account of a set value of the lamp power and/or a set value which is characteristic of the lamp power, **characterized in that** the apparatus is set up in such a way that the user merely applies a temperature specification and the processor device (18) then automatically calculates whether and how many heating elements (42, 44, 46, 48, 50, 52, 54, 56, 58), e.g. heating lamps, must be activated in which layers.

**2.** Apparatus (1) according to claim 1,
**characterized in that**
the predefined set values are absolute or relative (percentage) zone power levels.

**3.** Apparatus (1) according to any of the preceding claims,
**characterized in that**
the predefined set values are the energy levels introduced into the preform per zone and/or the preform temperatures to be achieved per zone.

**4.** Apparatus (1) according to any of the preceding claims,
**characterized in that**

the processor device (18) is provided which is suitable and intended for determining the optimal set values of the individual heating elements (42, 44, 46, 48, 50, 52, 54, 56, 58) for achieving a longest possible service life of the lamps.

5. Apparatus (1) according to any of the preceding claims,
   **characterized in that**
   the processor device (18) and/or an algorithm determines the set values of the individual heating elements (42, 44, 46, 48, 50, 52, 54, 56, 58) which are optimal for the most energy-efficient heating profile.

6. Apparatus (1) according to claim 1,
   **characterized in that**
   the input device (16) allows the input of a plurality of set values for the individual heating zones.

7. Apparatus (1) according to at least one of the preceding claims,
   **characterized in that**
   the apparatus (1) has a plurality of heating elements (42, 44, 46, 48, 50, 52, 54, 56, 58) which are arranged successively along the transport path of the plastic preforms (10).

8. Apparatus (1) according to the preceding claim,
   **characterized in that**
   the heating elements (42, 44, 46, 48, 50, 52, 54, 56, 58) of each heating section (4, 14) can be controlled independently of each other.

9. Apparatus (1) according to at least one of the preceding claims,
   **characterized in that**
   the apparatus (1) has a first temperature measuring device (6) which measures an actual temperature ($T_{IST}$) of the plastic preforms (10).

10. Apparatus according to at least one of the preceding claims,
    **characterized in that**
    the control device (20) controls a power of the heating elements (42, 44, 46, 48, 50, 52, 54, 56, 58) between at least two limit values.

11. Apparatus (1) according to at least one of the preceding claims,
    **characterized in that**
    the apparatus (1) comprises a second temperature measuring device (26) for measuring a temperature of the plastic preforms (10).

12. Apparatus according to at least one of the preceding claims,
    **characterized in that**
    heating elements (42, 44, 46, 48, 50, 52, 54, 56, 58) or groups of heating elements (42, 44, 46, 48, 50, 52, 54, 56, 58) to be activated can be selected.

13. Method for heating plastic preforms (10), wherein a transport device (2) transports the plastic preforms (10) along a predefined transport path (P), wherein this transport device (2) has a plurality of holding elements (22) for holding the plastic preforms (10), and wherein at least one first heating section (4), which is arranged along said transport path (P), and at least one second heating section (14), which is arranged along said transport path (P) downstream of the first heating section (4), heat the plastic preforms, wherein the heating sections (4, 14) each comprise a plurality of independently controllable heating elements (42, 44, 46, 48, 50, 52, 54, 56, 58) which allow heating of the plastic preforms in several heating zones, lying above each other in the longitudinal direction of the plastic preforms, with a temperature profile which changes in the longitudinal direction of the plastic preforms (10), wherein a control device controls these heating elements, wherein an input device (16) is proceeded via which the user can predefine a set value for a heating process, and a processor device actuates the individual heating elements (42, 44, 46, 48, 50, 52, 54, 56, 58) taking account of this set value, and preferably actuates the individual heating elements (42, 44, 46, 48, 50, 52, 54, 56, 58) taking into account a set value of the lamp power and/or a set value which is characteristic of the lamp power,
    **characterized in that**
    the user merely applies a temperature specification and the processor device (18) then automatically calculates whether and how many heating elements (42, 44, 46, 48, 50, 52, 54, 56, 58), e.g. heating lamps, must be activated in which layers.

**14.** Method according to claim 13,
**characterized in that**
a temperature of the plastic preforms is measured for at least part of the time.

**Revendications**

**1.** Dispositif (1) destiné à réchauffer des préformes en matière plastique (10) avec un système de transport (2), lequel transporte les préformes en matière plastique (10) le long d'un trajet de transport (P) spécifié, dans lequel ledit système de transport (2) présente une pluralité d'éléments de maintien (22) destinés à maintenir les préformes en matière plastique (10), et avec au moins un premier tronçon de chauffage (4), lequel est disposé le long dudit trajet de transport (P), ainsi qu'au moins un deuxième tronçon de chauffage (14), lequel est disposé en aval du premier tronçon de chauffage (4) le long dudit trajet de transport (P), dans lequel les tronçons de chauffage (4, 14) présentent respectivement une pluralité d'éléments de chauffage (42, 44, 46, 48, 50, 52, 54, 56, 58) pouvant être commandés indépendamment les uns des autres, lesquels permettent un réchauffage des préformes en matière plastique dans plusieurs zones de chauffage situées les unes au-dessus des autres dans le sens longitudinal des préformes en matière plastique avec un profil de température variant dans un sens longitudinal des préformes en matière plastique (10), dans lequel le dispositif (1) présente un système de commande destiné à commander lesdits tronçons de chauffage, dans lequel le dispositif (1) présente un système de saisie (16), par l'intermédiaire duquel au moins une valeur de consigne pour les diverses zones de chauffage peut être spécifiée par l'utilisateur et un système de commande (20) est prévu, lequel pilote automatiquement les divers éléments de chauffage (42, 44, 46, 48, 50, 52, 54, 56, 58) en tenant compte d'une valeur de consigne de la puissance de lampe et/ou d'une valeur de consigne caractéristique de la puissance de lampe,
**caractérisé en ce que**
le dispositif est mis au point de telle sorte qu'une spécification de température seulement est activée par l'utilisateur puis un système de processeur (18) calcule de manière autonome les couches dans lesquelles, et le nombre d'éléments de chauffage (42, 44, 46, 48, 50, 52, 54, 56, 58) ou de lampes de chauffage qui sont à activer ou non.

**2.** Dispositif (1) selon la revendication 1,
**caractérisé en ce que**
les valeurs de consignes pouvant être spécifiées sont des puissances de zone absolues ou relatives (exprimées en pourcentage).

**3.** Dispositif (1) selon l'une quelconque des revendications précédentes,
**caractérisé en ce que**
les valeurs de consigne pouvant être spécifiées sont les énergies introduites par zone dans la préforme et/ou sont les températures de préforme à atteindre par zone.

**4.** Dispositif (1) selon l'une quelconque des revendications précédentes,
**caractérisé en ce que**
le système de processeur (18) est adapté pour et se destine à définir des valeurs de consigne optimales des divers éléments de chauffage (42, 44, 46, 48, 50, 52, 54, 56, 58) pour une durée de vie aussi longue que possible des lampes.

**5.** Dispositif (1) selon l'une quelconque des revendications précédentes,
**caractérisé en ce que**
le système de processeur (18) et/ou un algorithme définissent les valeurs de consigne optimales pour un profil de chauffage aussi efficace que possible en termes d'énergie des divers éléments de chauffage (42, 44, 46, 48, 50, 52, 54, 56, 58).

**6.** Dispositif (1) selon la revendication 1,
**caractérisé en ce que**
le système de saisie (16) permet la saisie d'une pluralité de valeurs de consigne pour les diverses zones de chauffage.

**7.** Dispositif (1) selon au moins l'une quelconque des revendications précédentes,
**caractérisé en ce que**
le dispositif (1) présente une pluralité d'éléments de chauffage (42, 44, 46, 48, 50, 52, 54, 56, 58), qui sont disposés les uns derrière les autres le long du trajet de transport des préformes en matière plastique (10).

8. Dispositif (1) selon la revendication précédente,
   **caractérisé en ce que**
   les éléments de chauffage (42, 44, 46, 48, 50, 52, 54, 56, 58) de chaque tronçon de chauffage (4, 14) peuvent être commandés indépendamment les uns des autres.

9. Dispositif (1) selon au moins l'une quelconque des revendications précédentes,
   **caractérisé en ce que**
   le dispositif (1) présente un premier système de mesure de température (6), lequel mesure une température réelle ($T_{IST}$) des préformes en matière plastique (10).

10. Dispositif (1) selon au moins l'une quelconque des revendications précédentes,
    **caractérisé en ce que**
    le système de commande (20) commande une puissance des éléments de chauffage (42, 44, 46, 48, 50, 52, 54, 56, 58) entre au moins deux valeurs limites.

11. Dispositif (1) selon au moins l'une quelconque des revendications précédentes,
    **caractérisé en ce que**
    le dispositif (1) présente un deuxième système de mesure de température (26) destiné à mesurer une température des préformes en matière plastique (10).

12. Dispositif (1) selon au moins l'une quelconque des revendications précédentes,
    **caractérisé en ce que**
    des éléments de chauffage (42, 44, 46, 48, 50, 52, 54, 56, 58) ou des groupes d'éléments de chauffage (42, 44, 46, 48, 50, 52, 54, 56, 58) sont activés, lesquels peuvent être sélectionnés.

13. Procédé pour réchauffer des préformes en matière plastique (10), dans lequel les préformes en matière plastique (10) sont transportées le long d'un trajet de transport (P) spécifié avec un système de transport (2), dans lequel ledit système de transport (2) présente une pluralité d'éléments de maintien (22) destinés à maintenir les préformes en matière plastique (10), et dans lequel au moins un premier tronçon de chauffage (4), lequel est disposé le long dudit trajet de transport (P), ainsi qu'au moins un deuxième tronçon de chauffage (14), lequel est disposé en aval du premier tronçon de chauffage (4) le long dudit trajet de transport (P), réchauffent les préformes en matière plastique, dans lequel les tronçons de chauffage (4, 14) présentent respectivement une pluralité d'éléments de chauffage (42, 44, 46, 48, 50, 52, 54, 56, 58) pouvant être commandés indépendamment les uns des autres, lesquels réchauffent les préformes en matière plastique dans plusieurs zones de chauffage situées les unes au-dessus des autres dans le sens longitudinal des préformes en matière plastique avec un profil de température variant dans un sens longitudinal des préformes en matière plastique (10), dans lequel un système de commande commande lesdits éléments de chauffage, dans lequel est prévu un système de saisie (16), par l'intermédiaire duquel au moins une valeur de consigne pour une opération de chauffage peut être spécifiée par l'utilisateur et un système de processeur (18) pilote les divers éléments de chauffage en tenant compte de ladite valeur de consigne et pilote les divers éléments de chauffage (42, 44, 46, 48, 50, 52, 54, 56, 58) en tenant compte d'une valeur de consigne de la puissance de lampe et/ou d'une valeur de consigne caractéristique de la puissance de lampe,
    **caractérisé en ce que**
    une spécification de température seulement est activée par l'utilisateur puis le système de processeur (18) calcule de manière autonome les couches dans lesquelles et le nombre d'éléments de chauffage (42, 44, 46, 48, 50, 52, 54, 56, 58) ou de lampes de chauffage qui sont à activer ou non.

14. Procédé selon la revendication 13,
    **caractérisé en ce que**
    une température des préformes en matière plastique (10) est mesurée au moins par intermittence.

Fig. 1

Fig. 1

Fig. 2

Fig. 3

Eingaben Heizprozess Assisten

Fig. 4

Fig. 5a

Fig. 5b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010314806 A1
- DE 102009047541 A1
- AT 521 U1
- EP 2390082 A1
- DE 102009015519 A1
- WO 2012172250 A1
- DE 102009026259 A1
- US 2006157896 A1
- DE 102015122106 A1
- US 2007066714 A1
- EP 2390082 B1